# EUROPÄISCHE PATENTSCHRIFT

(11) **EP 3 282 164 B1**
(45) Veröffentlichungstag und Bekanntmachung des Hinweises auf die Patenterteilung: **06.10.2021**
(21) Anmeldenummer: 17185246.0
(22) Anmeldetag: 08.08.2017
(51) Int. Cl.: F16L 59/14, F16L 9/18, F16L 23/08, F16L 23/16, F24F 13/02, F16L 25/08

(54) **ROHRLEITUNGSSYSTEM**
PIPING SYSTEM
SYSTÈME DE CONDUIT

(30) Priorität: 12.08.2016 DE 202016104450 U
(43) Veröffentlichungstag der Anmeldung: 14.02.2018
(73) Patentinhaber: Etex Building Performance GmbH, 40878 Ratingen (DE)
(72) Erfinder: PIONTKOWSKI, Wilfried, 15936 Dahme (DE); RAUSER, Sebastian, 40878 Ratingen (DE)
(74) Vertreter: Etex Services NV - Etex IPSC

(56) Entgegenhaltungen:
- EP-A1- 2 479 469
- WO-A1-2008/128370
- WO-A2-03/002306
- DE-A1- 4 308 013
- DE-A1- 4 425 898
- DE-T2- 60 114 745
- GB-A- 2 517 476
- US-A- 5 234 234

## Beschreibung

Die vorliegende Erfindung betrifft ein Rohrleitungssystem, insbesondere zum Einsatz für feuerfeste Lüftungsleitungen. Gegenstand der Erfindung sind ferner ein Rohr des erfindungsgemäßen Rohrleitungssystems sowie eine Schelle des erfindungsgemäßen Rohrleitungssystems.

Es ist aus dem Stand der Technik bekannt, im Innen- und/oder Außenbereich eingesetzte Rohre, wie beispielsweise Lüftungs- oder Abwasserrohre, mit Hilfe von Flanschen und entsprechenden Flanschverbindern zu verbinden.

So offenbart die DE 10 2004 052 706 A1 einen Dichtring für eine Dichtungsanordnung zum Abdichten einer Verbindungsstelle einer Rohrleitung zwischen zwei Rohren. Dabei ist ein Spannring vorgesehen, welcher den Dichtring mit einer Anpresskraft beaufschlagt und auf diese Weise eine Abdichtung der Verbindungsstelle der Rohrleitung gewährleistet. Als Nachteil ist hierbei neben dem erhöhten konstruktiven Aufwand anzusehen, dass der Dichtring unter Umständen im Rohrinneren nicht bündig mit den angrenzenden Rohren abschließt und dadurch insbesondere bei Lüftungsrohren Verwirbelungen entstehen können. Hinzukommt, dass aufgrund der Ausbildung von Flanschen an der Außenseite der Rohre eine flache Bauweise der Dichtungsanordnung nicht gewährleistet werden kann.

Ferner ist aus der DE 10 2010 053 535 A1 eine Verbindung zweier Flansche bekannt, welche durch Umgreifen der an den Stirnseiten zweier Rohre angeordneten radialen Flansche durch einen Spannring realisiert ist. Dabei steht ein mit dem Außenumfang des Spannrings in radialer Richtung nach innen wirkendes Klemmelement lösbar in Eingriff. Auch hierbei ist es als nachteilig anzusehen, dass eine flache Bauweise der Dichtung aufgrund der Ausbildung von Flanschen an den Rohren nicht vorgenommen werden kann.

In der DE 175 12 432 B4 wird eine Vorrichtung zum Verbinden von Rohrleitungen für ein unter Druck stehendes Fluid mittels zweier Halbschalen beschrieben, bei welcher zwei mittels einer Gelenkeinrichtung verschwenkbar miteinander verbundene Halbschalen zum Einsatz kommen. Durch deren Verwendung wird eine verkürzte Montagezeit zu Lasten eines erhöhten konstruktiven Aufwandes erreicht. Zudem hat eine derartige Verbindungsvorrichtung auch den Nachteil, dass diese sowohl in radialer als auch in axialer Richtung einen erhöhten Bauraum benötigt.

Aus der DE 10 2007 011 607 A1 ist des Weiteren eine Rohrverbindung für Rohrstücke mit korrosionsgefährdeten Rohrkörpern bekannt, welche einen Stirnschutz, der mindestens eine Rohrstirnseite mindestens eines der Rohrstücke überdeckt, ein Verbindungselement, das Rohrendbereiche der Rohrstücke mechanisch relativ zueinander fixiert, und eine Abdichteinheit, die zu einer für ein in den Rohrstücken geführtes fluiddichten Verbindung beiträgt, umfasst. Diese Rohrverbindung ermöglicht zwar einen vergleichsweise geringen Bauraum, insbesondere in radialer Richtung, ist jedoch in ihrer Konstruktion aufgrund der eingesetzten Dichtungsanordnung aufwändig. Ferner stellt sich hierbei als nachteilig dar, dass an einem jeden Rohr Innenschutzkörper zum Einsatz kommen müssen, welche die Stoßkanten der zu verbindenden Rohre umgreifen und dadurch eine glatte Rohrinnenfläche verhindern, was zur Entstehung von Verwirbelungen im Rohrinneren beitragen kann.

In der WO 03/002306 wird eine Bandklemme zum Verbinden von Rohrkörpern wie Komponenten von Fahrzeugabgassystemen beschrieben. Die Bandklemme hat ein Band, das sich von einem ersten Ende zu einem zweiten Ende erstreckt, und umfasst ein Paar beabstandeter Rippen, die sich mindestens teilweise zwischen dem ersten und dem zweiten Ende erstrecken. Ein Anziehmechanismus ist mit dem Band verbunden und umfasst zwei zueinander und voneinander weg bewegliche Klemmelemente zum Anziehen und Lösen des Bandes. Die Bandklemme umfasst ferner eine Dichtung, die an einer Innenfläche des Bandes zwischen den Rippen angeordnet ist und sich zwischen dem ersten und dem zweiten Ende erstreckt. Die Verwendung der Rippen mit der dazwischenliegenden Dichtung stellt eine mechanische Verriegelung der Bandklemme mit den Rohrkörpern bereit, während an der Verbindungsstelle zwischen den beiden Körpern eine hermetische Abdichtung bereitgestellt wird.

Vor diesem Hintergrund liegt der vorliegenden Erfindung die Aufgabe zugrunde, eine Verbindung von Rohren, insbesondere von zum Einsatz für feuerfeste Lüftungsleitungen geeigneten Rohren, bereitzustellen, welche die aus dem Stand der Technik bekannten Nachteile vermeidet und bei einer einfachen Konstruktionsweise nicht nur die hinsichtlich des Brandschutzes bestehenden Anforderungen erfüllt, sondern dabei auch noch eine in radialer und axialer Richtung kompakte Bauweise ermöglicht.

Diese Aufgabe wird erfindungsgemäß durch die Merkmale des Anspruchs 1 gelöst.

Zur technischen Lösung wird mit der vorliegenden Erfindung ein Rohrleitungssystem, zum Einsatz für feuerfeste Lüftungsleitungen, vorgeschlagen, umfassend
- wenigstens ein erstes Rohr, welches an wenigstens einem Ende eine zumindest abschnittsweise radial im Außenbereich um den Umfang des ersten Rohres verlaufende Sicke aufweist,
- wenigstens ein zweites Rohr, welches an wenigstens einem Ende eine zumindest abschnittsweise radial im Außenbereich um den Umfang des zweiten Rohres verlaufende Sicke aufweist, und
- wenigstens eine zur Verbindung der Rohre öffenbare Schelle, mit
   - zwei zumindest abschnittsweise angeordneten Sicken, wobei die erste der Sicken mit der am ersten Rohr vorgesehenen Sicke und die zweite der Sicken mit der am zweiten Rohr vorgesehenen Sicke in Eingriff verbringbar ist, wobei die Stoßkante des die Sicke aufweisenden Endes des ersten Rohres an der Stoßkante des die Sicke aufweisenden Endes des zweiten Rohres angeordnet ist, und
   - einem sich zwischen den Sicken der Schelle erstreckenden Mittenbereich, welcher an einer zur Öffnung vorgesehenen Position der Schelle einen Verbinder zum Schließen der Schelle aufweist.

Die Erfindung macht dabei insbesondere von der Erkenntnis Gebrauch, dass bei Verzicht auf die regelmäßig im Stand der Technik verwendeten Flanschelemente eine kompakte Bauform erzielt werden kann. Zur kraft- und formschlüssigen Verbindung zweier Rohre ist erfindungsgemäß stattdessen vorgesehen, dass jedes der zu verbindenden Rohre eine zumindest abschnittsweise radial im Außenbereich um den Umfang des jeweiligen Rohres verlaufende Sicke aufweist. Zur Verbindung der vorzugsweise einen kreisförmigen Querschnitt aufweisenden Rohre miteinander ist ferner eine öffenbare Schelle vorgesehen, welche ebenfalls mit zu den Sicken der jeweiligen Rohre korrespondierenden Sicken ausgestattet ist. Der Einsatz von Sicken ist insbesondere deshalb vorteilhaft, da neben der geringen radialen Bauhöhe eine einfache Herstellung der die Sicken aufweisenden Komponenten erzielt werden kann. Bevorzugt werden die Sicken dabei am jeweiligen Ende eines Rohres im Bereich der Stoßkante angeordnet, so dass auch eine hinsichtlich der axialen Ausprägung geringe Bauform der Schelle und somit des Gesamtsystems erzielt werden kann. Je näher die Sicken dabei an den Enden im Bereich der Stoßkante des jeweiligen Rohres angeordnet sind, desto geringer ist die axiale Bauform der zur Verbindung der Rohre vorgesehenen Schelle.

Eine weitere vorteilhafte Ausgestaltung der Erfindung sieht vor, dass eine Sicke eine Breite in einem Bereich von 8 mm bis 50 mm, bevorzugt in einem Bereich von 12 mm bis 30 mm, besonders bevorzugt in einem Bereich von 17 mm bis 23 mm aufweist. Vorteilhafterweise weist eine Sicke eine Höhe in einem Bereich von 5 mm bis 25 mm, bevorzugt in einem Bereich von 5 mm bis 15 mm, besonders bevorzugt in einem Bereich von 7 mm bis 11 mm auf.

Eine weitere Ausgestaltung der Erfindung sieht vor, dass über den Umfang der Rohre, vorzugsweise gleichmäßig verteilt, wenigstens drei Sicken vorgesehen, also abschnittsweise angeordnet sind, wobei jede der Sicken einen Winkelbereich bzw. Abschnitt von wenigstens 10° bezogen auf den Umfang des jeweiligen Rohrs erfasst. Eine weitere, besonders bevorzugte Ausgestaltung der Erfindung sieht vor, dass die Sicke durchgehend ausgebildet ist, das heißt einen Winkelbereich bzw. Abschnitt von 360° bezogen auf den Umfang des jeweiligen Rohrs erfasst.

Gemäß einem weiteren Vorschlag der Erfindung liegt der Abstand zwischen dem freien Ende des Rohrs und dem Anfang der sich von diesem Ende des Rohrs her anschließenden Sicke in einem Bereich von 10 mm bis 60 mm, bevorzugt in einem Bereich von 15 mm bis 40 mm, besonders bevorzugt in einem Bereich von 20 mm bis 30 mm.

Um eine form- und kraftschlüssige Verbindung der beiden zu verbindenden Rohre zu erzielen, ist vorgesehen, dass der sich zwischen den Sicken der Schelle erstreckende Mittenbereich an einer zur Öffnung vorgesehenen Position der Schelle einen Verbinder zum Schließen der Schelle aufweist. Im Bereich des Verbinders kann dabei vorgesehen sein, dass zur einfacheren Montage die Ausbildung des Sickenbereichs der Schelle unterbrochen ist.

Gemäß einer bevorzugten Ausgestaltung der Erfindung ist als Verbinder zum Schließen der Schelle ein Einschraubenverbinder oder ein Zweischraubenverbinder vorgesehen. Derartige Verbinder erlauben trotz einfacher und kostengünstiger Bauweise ein sicheres und festes Schließen der die Rohre verbindenden Schelle und sind zudem einfach zu montieren. Ein Zweischraubenverbinder kann insbesondere bei Vorliegen größerer Rohrdurchmesser vorteilhaft sein, da hierbei für eine Verbindung in Abhängigkeit von der Beschaffenheit der zu verbindenden Rohre mitunter größere Kräfte aufgewandt werden müssen. Eine Montage von Einbeziehungsweise Zweischraubenverbinder kann mittels Durchführung desselben durch jeweils in einem abgewinkelten Endbereich der Schelle vorgesehene Öffnungen erfolgen, wobei zur Fixierung des Ein- beziehungsweise Zweischraubenverbinders beispielsweise eine Mutter oder eine Konterplatte mit Gewinde vorgesehen sein kann. Alternativ dazu kann auch - insbesondere in Abhängigkeit der für die Schelle verwendeten Materialstärke - ein in dieser vorgesehenes Gewinde zum Einsatz kommen, in welchem Ein- beziehungsweise Zweischraubenverbinder befestigt werden.

In einer weiteren vorteilhaften Ausgestaltung des erfindungsgemäßen Rohrleitungssystems ist vorgesehen, dass der Verbinder zum Schließen der Schelle auf einer ersten Seite eine Gegenplatte mit Gewinde und auf einer zweiten Seite eine Gegenplatte ohne Gewinde aufweist. Durch den Einsatz von Gegenplatten kann insbesondere bei Vorliegen einer geringen Materialstärke der Schelle erreicht werden, dass eine sichere Verbindung der Rohre gewährleistet werden kann, ohne dabei mitunter einem deutlich höheren Materialeinsatz durch Verwendung eines stabileren Materials für die Schelle Rechnung tragen zu müssen. Die Gegenplatten werden gemäß dieser Ausführungsform im Bereich abgewinkelter Endbereiche des Mittenbereichs der Schelle angeordnet, wobei in diesen Endbereichen selbst ebenfalls Ausnehmungen zur Durchführung der einzusetzenden Schraubenverbinder vorgesehen sind.

Gemäß einer weiteren Ausgestaltung des erfindungsgemäßen Rohrleitungssystems ist vorgesehen, dass zwischen der Stoßkante des die Sicke aufweisenden Endes des ersten Rohres und der Stoßkante des die Sicke aufweisenden Endes des zweiten Rohres zumindest teilweise eine Dichtungsmasse angeordnet ist. Die Abdichtung erfolgt dabei derart, dass das erfindungsgemäße Rohrleitungssystem sowohl bei Umgebungsbedingungen als auch unter Brandbeanspruchung als Lüftungsleitung verwendbar ist. Insbesondere bei Einsatz des Rohrleitungssystems für feuerfeste Lüftungsleitungen ist es notwendig, dass zwischen den Stoßkanten zu verbindender Rohre keine Lecke vorhanden sind, aus welchen zum einen mitunter einen Brand weiter entfachende Stoffe entweichen könnten und in welche zum anderen Feuer eindringen könnte. Erfindungsgemäß kann dabei in Abhängigkeit von der eingesetzten Dichtungsmasse eine Anordnung derselben über die gesamte Oberfläche der Stoßkanten oder aber lediglich über einen Teil der Oberfläche der Stoßkanten vorgesehen sein.

Gemäß einer anderen vorteilhaften Ausgestaltung der Erfindung kann vorgesehen sein, dass als Dichtungsmasse eine flexible Einkomponenten-Dichtungsmasse zum Einsatz kommt. Für den Einsatz einer solchen Dichtungsmasse sprechen insbesondere deren gute Verarbeitbarkeit sowie deren gute Haftungseigenschaften. Auch durch den Einsatz einer solchen Dichtungsmasse kann im Brandfall ein Brandund/oder Rauchgasdurchtritt durch die zwischen zwei Rohren des erfindungsgemäßen Rohrleitungssystems bestehende Stoßkante verhindert werden. Vorteilhafterweise kommt dabei eine Dichtungsmasse zum Einsatz, welche bei Temperatureinwirkung nicht schrumpft, sondern aufquillt bzw. aufschäumt oder bei Temperatureinwirkung sonst wie ihr Volumen-vergrößernd bzw. expandierend ist. Vorteilhafterweise weist die Dichtungsmasse derartige Volumen-vergrößernde, insbesondere aufquellende bzw. aufschäumende Eigenschaften bei einer Temperatureinwirkung nach der Einheits-Temperaturzeitkurve nach DIN 4102-2 bzw. EN 1363-1 auf. Die Dichtungsmasse ist dabei vorzugsweise flexibel, bleibt im Wesentlichen dicht gegenüber Brand und Rauchgasen, und behält vorteilhafterweise ihre Haftungseigenschaften. Eine weitere vorteilhafte Ausgestaltung der Erfindung sieht vor, dass die Dichtungsmasse ein Acrylat mit Füllstoffen ist, welche die vorgenannten Eigenschaften bewirken. Vorteilhafterweise ist ein solches Acrylat mit Füllstoffen als Dichtungsmasse direkt auf einer Baustelle einbringbar, beispielsweise aus sogenannten Kartuschen. Ferner kann eine entsprechende Dichtung mit einem Acrylat mit Füllstoffen als Dichtungsmasse auch werksmäßig vorgefertigt sein. Als derartige Dichtungsmasse kann beispielsweise das Produkt PROMASEAL®-Mastic der Firma Promat genutzt werden.

Erfindungsgemäß ist weiter vorgesehen, dass der Bereich der aneinanderstoßenden Stoßkanten des die Sicke aufweisenden Endes des ersten Rohres und des die Sicke aufweisenden Endes des zweiten Rohres von außen zumindest teilweise mit einem Band, insbesondere einem Aluminiumband, versehen ist, durch welches der sich unterhalb der Schelle befindende Stoßbereich überdeckt bzw. überdeckbar ist. Durch eine derartige Abdeckung kann eine verbesserte Abdichtung der Stoßkante erzielt werden. Eine vorteilhafte Ausgestaltung der Erfindung sieht vor, dass das Band im sogenannten Kaltzustand, das heißt ohne Brandeinwirkung, eine Abdichtungsfunktion bewirkt. Eine weitere vorteilhafte Ausgestaltung der Erfindung sieht vor, dass das Band dauerhaft eine gute Haftung auf Metall aufweist. Vorteilhafterweise ist das Band ferner leicht verarbeitbar und insbesondere ablängbar. Vorteilhafterweise kommt dabei ein Dichtungsband zum Einsatz, welches kostengünstig und allgemein verfügbar ist und daher beispielsweise im Falle einer Revisionierung oder im Falle einer Korrektur einer falscher bzw. fehlerhaften Anbringung leicht und günstig ersetzbar ist. Besonders bevorzugt ist ein Aluminiumband, insbesondere da das Band im Brandfall nicht abdichten muss und sich von dem Kanal bzw. den Rohren insbesondere ablösen oder wegschmelzen kann. Vorteilhafterweise weist das Band eine Breite in einem Bereich von 50 mm bis 200 mm, bevorzugt in einem Bereich von 80 mm bis 150 mm, besonders bevorzugt in einem Bereich von 100 mm bis 130 mm auf.

Erfindungsgemäß ist als Band oder als zusätzliche Dichtung ein drucklos aufschäumendes, flexibles Brandschutzlaminat vorgesehen. Dies ist insbesondere vorteilhaft, da ein solches nicht nur im Brandfall um ein Vielfaches expandiert und dadurch den Durchtritt von Rauch und/oder Feuer verhindert, sondern auch isolierend wirkt. Zudem ist auch eine einfache Handhabbarkeit gegeben, da das Brandschutzlaminat mit üblichen Schneidwerkzeugen auf das gewünschte Maß abgelängt werden kann. Eine weitere vorteilhafte Ausgestaltung der Erfindung sieht vor, dass das Brandschutzlaminat Bindemittel und/oder Füllstoffe aufweist, welche die vorgenannten Eigenschaften bewirken bzw. diese unterstützen. Vorteilhafterweise bewirken die Bindemittel eines erfindungsgemäßen Brandschutzlaminats dessen Flexibilität und/oder Elastizität. In einer weiteren vorteilhaften Ausgestaltung der Erfindung bewirken die Füllstoffe eines erfindungsgemäßen Brandschutzlaminats bei Temperatureinwirkung ein Aufquellen bzw. Aufschäumen oder eine Volumenvergrößerung bzw. ein Expandieren des Brandschutzlaminats, vorzugsweise bei einer Temperatureinwirkung nach der Einheits-Temperaturzeitkurve nach DIN 4102-2 bzw. EN 1363-1. Als ein derartiges Material kann beispielsweise das Produkt PROMASEAL®-LW der Firma Promat verwendet werden.

Alternativ ist als Band oder als zusätzliche Dichtung ein unter Druck aufblähendes Material vorgesehen. Ein derartiges Material, welches als Wirkstoff beispielsweise Graphit enthalten kann, hat den Vorteil, dass es bei Wärmeeinwirkung auf ein Mehrfaches seiner ursprünglichen Dicke expandiert und eine thermisch stabile Schaumschicht mit niedriger Wärmeleitfähigkeit bildet. Dadurch kann in einem Brandfall eine Ausbreitung von Feuer und/oder Rauch im erfindungsgemäßen Rohrleitungssystem verhindert werden.

Gemäß einer weiteren vorteilhaften Ausgestaltung des erfindungsgemäßen Rohrleitungssystems ist vorgesehen, dass durch die Schelle der Abstand der zu verbindenden Rohre festlegbar ist, insbesondere durch Beabstandung der zwei zumindest abschnittsweise angeordneten Sicken der Schelle. Dies hat den Vorteil, dass beispielsweise bei der Notwendigkeit, eine größere Menge an Dichtungsmasse zwischen den Stoßkanten der verbindenden Rohre anzuordnen, dies erreicht werden kann, ohne Veränderungen an den Rohren vornehmen zu müssen. Um einen gewünschten Abstand zwischen den Stoßkanten der Rohre einstellen zu können, ist es lediglich erforderlich, den Abstand zwischen den Sicken der die Rohre verbindenden Schelle zu variieren. Aufwändige Änderungen an den Rohren selbst werden auf diese Weise vermieden. Bei Anpassung der Schelle ist darauf zu achten, dass die Schelle in ihrer Breite derart dimensioniert ist, dass eine Überlappung der im Bereich der Stoßkante der jeweils die Sicke aufweisenden Enden der Rohre gegeben ist.

In einer weiteren vorteilhaften Ausgestaltung der Erfindung ist ferner vorgesehen, dass die zur Verbindung zweier Rohre ausgebildete Schelle lediglich eine zumindest abschnittsweise angeordnete Sicke aufweist. Dies ist insbesondere dann vorteilhaft, wenn eine Verbindung von einem eine Sicke aufweisenden Rohr mit einem keine Sicke aufweisenden Rohr erfolgen soll. In diesem Fall kann die Schelle beispielsweise durch Schweißen, Schrauben oder dergleichen Befestigungsart an dem keine Sicke aufweisenden Rohr befestigt und fixiert werden und eine Befestigung an dem die Sicke aufweisenden Rohr entsprechend den vorbeschriebenen erfindungsgemäßen Möglichkeiten erfolgen.

Weitere Einzelheiten, Merkmale und Vorteile der Erfindung werden nachfolgend anhand der in den Figuren der Zeichnungen dargestellten Ausführungsbeispiele näher erläutert. Dabei zeigen:
- Fig. 1: in einer schematischen Schnittansicht ein Ausführungsbeispiel eines erfindungsgemäßen Rohrleitungssystems;
- Fig. 2a: in einer schematischen Seitenansicht ein Ausführungsbeispiel für eine Schelle eines erfindungsgemäßen Rohrleitungssystems;
- Fig. 2b: in einer perspektivischen Ansicht ein weiteres Ausführungsbeispiel für eine Schelle eines erfindungsgemäßen Rohrleitungssystems;
- Fig. 3: in einer schematischen Schnittansicht ein weiteres Ausführungsbeispiel eines erfindungsgemäßen Rohrleitungssystems; und
- Fig. 4: in einer schematischen Schnittansicht ein weiteres Ausführungsbeispiel eines erfindungsgemäßen Rohrleitungssystems.

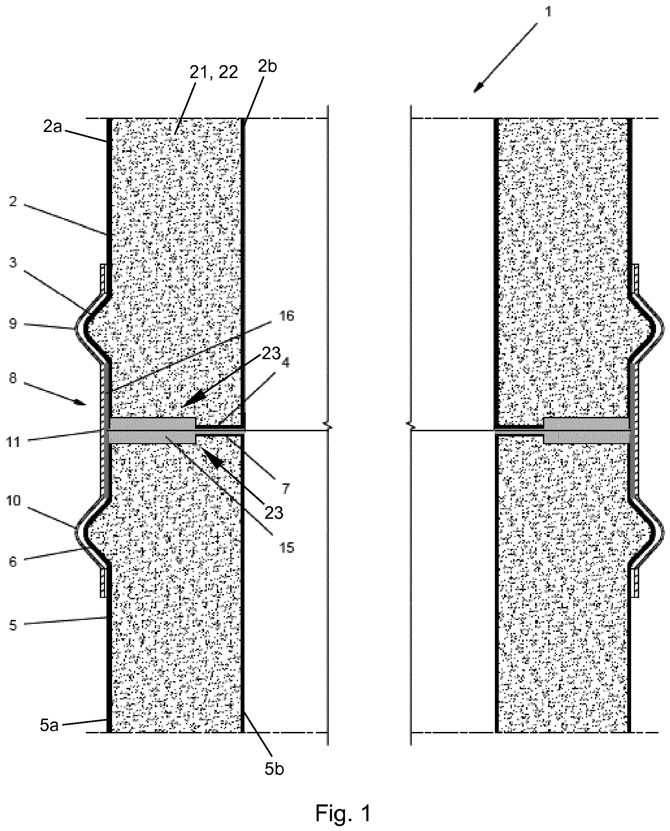

In Fig. 1 ist in einer schematischen Schnittansicht ein Ausführungsbeispiel eines erfindungsgemäßen Rohrleitungssystems 1 dargestellt, bei welchem zwei Stoßkante 4 an Stoßkante 7 einander angeordnete Rohre 2 und 5 mittels einer Schelle 8 aus Stahlblech miteinander verbunden sind.

Die Rohre 2 und 5 weisen jeweils ein äußeres Rohrelement 2a bzw. 5a und ein inneres Rohrelement 2b bzw. 5b aus Stahlblech auf. Dabei ist das innere Rohrelement 2b bzw. 5b in dem äußeren Rohrelement 2a bzw. 5a mit diesem einen Zwischenraum 21 bildend angeordnet. Der Zwischenraum 21 ist mit einer Brandschutzmasse 22, ausgefüllt, vorzugsweise mit einer erfindungsgemäßen Brandschutzmasse 22.

Eine Verbindung der Rohre 2 und 5 wird dabei dadurch ermöglicht, dass das erste Rohr 2 an wenigstens einem Ende eine zumindest abschnittsweise radial im Außenbereich um den Umfang des ersten Rohres 2 verlaufende Sicke 3 und das zweite Rohr 5 ebenfalls an wenigstens einem Ende eine zumindest abschnittsweise radial im Außenbereich um den Umfang des zweiten Rohres 5 verlaufende Sicke 6 aufweist. Die Sicke 3 bzw. 6 des Rohres 2 bzw. 5 sind dabei an dem äußeren Rohrelement 2a bzw. 5a des Rohrs 2 bzw. 5 ausgebildet. Korrespondierend zu diesen Sicken 3 und 6 sind an der zur Verbindung der Rohre 2 und 4 öffenbaren Schelle 8 ebenfalls zwei zumindest abschnittsweise angeordnete Sicken 9 und 10 vorgesehen, wobei die erste der Sicken 9 mit der am ersten Rohr 2 vorgesehenen Sicke 3 und die zweite der Sicken 10 mit der am zweiten Rohr 5 vorgesehenen Sicke 6 in Eingriff verbringbar ist und dabei die Stoßkante 4 des die Sicke 3 aufweisenden Endes des ersten Rohres 2 an der Stoßkante 7 des die Sicke 6 aufweisenden Endes des zweiten Rohres 5 angeordnet ist. Aufgrund der korrespondierend in den Rohren 2 und 4 beziehungsweise der Schelle 8 angeordneten Sicken 3 und 6 beziehungsweise 9 und 10 wird eine kraft- beziehungsweise formschlüssige Verbindung der Rohre 2 und 3 realisiert.

Wie weiter insbesondere anhand von Fig. 1 erkennbar, ist zwischen der Stoßkante 4 des die Sicke 3 aufweisenden Endes des ersten Rohres 2 und der Stoßkante 7 des die Sicke 6 aufweisenden Endes des zweiten Rohres 5 eine Dichtungsmasse 15 angeordnet, welche vorliegend jedoch nicht über die gesamte Oberfläche der Stoßkanten 4 und 7 angeordnet ist. Bei dieser Dichtungsmasse 15 handelt es sich vorzugsweise um eine flexible Einkomponenten-Dichtungsmasse. Vorteilhafterweise weist wenigstens eines der Rohre 2 bzw. 5 im Bereich der Stoßkannte 4 bzw. 7 zwischen dem äußeren Rohrelement 2a bzw. 5a und dem inneren Rohrelement 2b bzw. 5b eine Aussparung und/oder Einnutung 23 für wenigstens einen Teil der Dichtungsmasse 15 auf.

Ferner ist anhand des in Fig. 1 dargestellten Ausführungsbeispiels erkennbar, dass der Bereich der aneinanderstoßenden Stoßkanten 4 und 7 des die Sicke 3 aufweisenden Endes des ersten Rohres 2 und des die Sicke 6 aufweisenden Endes des zweiten Rohres 5 von außen mit einem weiteren Abdichtungszwecken genügenden Band 16 versehen ist. Durch dieses Band 16 wird der sich unterhalb der Schelle 8 befindende Stoßbereich überdeckt.

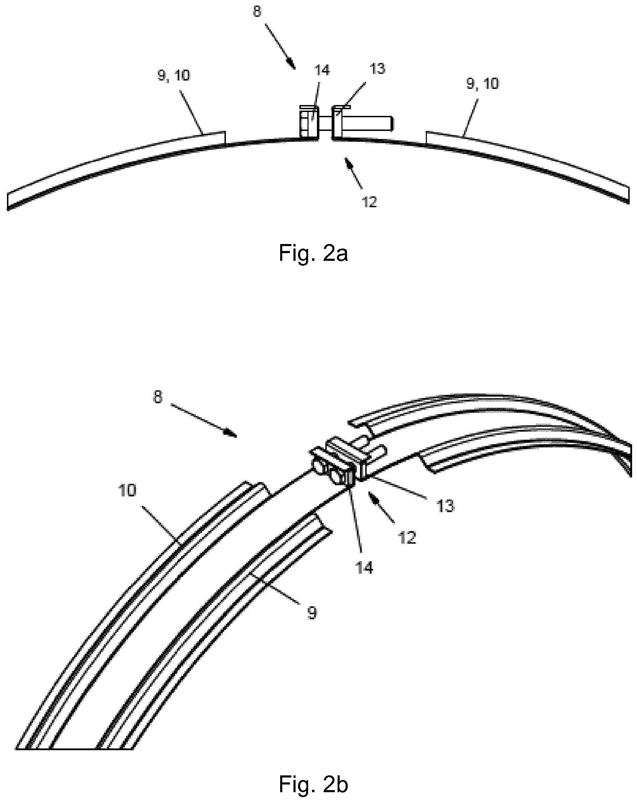

Fig. 2a zeigt in einer schematischen Seitenansicht ein Ausführungsbeispiel für eine Schelle 8 eines erfindungsgemäßen Rohrleitungssystems 1, wobei vorliegend als Verbinder 12 zum Schließen der Schelle 8 ein Einschraubenverbinder vorgesehen ist. Der Verbinder 12 zum Schließen der Schelle 8 ist dabei derart ausgebildet, dass auf einer ersten Seite eine Gegenplatte 13 mit Gewinde und auf einer zweiten Seite eine Gegenplatte 14 ohne Gewinde - aber mit Durchgangsöffnung - zum Einsatz kommt. Die Gegenplatten 13 und 14 werden gemäß dieser Ausführungsform im Bereich der abgewinkelten Endbereiche des Mittenbereiches 11 der Schelle 8 angeordnet, wobei in den abgewinkelten Endbereichen der Schelle 8 entsprechende Ausnehmungen beziehungsweise Öffnungen zur Durchführung des einzusetzenden Schraubenverbinders 12 vorgesehen sind. Anhand des vorliegenden Ausführungsbeispiels ist aufgrund der Seitenansicht ersichtlich, dass das erfindungsgemäße Rohrleitungssystem 1 insbesondere in radialer Richtung eine kompakte Bauweise ermöglicht, da der Verbinder 12 der Schelle 8 nur in geringem Maße über die Sicken 9 und 10 der Schelle 8 hinausragt.

Fig. 2b zeigt in einer perspektivischen Ansicht ein weiteres Ausführungsbeispiel für eine Schelle 8 eines erfindungsgemäßen Rohrleitungssystems 1, bei welcher als Verbinder 12 zum Schließen der Schelle 8 ein Zweischraubenverbinder vorgesehen ist. Auch hierbei ist vorgesehen, dass der Verbinder 12 zum Schließen der Schelle 8 auf einer ersten Seite eine Gegenplatte 13 mit Gewinde und auf einer zweiten Seite eine Gegenplatte 14 ohne Gewinde - aber mit Durchgangsöffnungen - aufweist. Wie bei dem Ausführungsbeispiel nach Fig. 2a sind die Gegenplatten 13 und 14 auch vorliegend im Bereich der abgewinkelten Endbereiche des Mittenbereiches 11 der Schelle 8 angeordnet. Dabei sind in den abgewinkelten Endbereichen der Schelle 8 jeweils zwei entsprechende Ausnehmungen beziehungsweise Öffnungen zur Durchführung der einzusetzenden Schrauben des Schraubenverbinders 12 vorgesehen. Ferner ist in Fig. 2b deutlich sichtbar, dass im Bereich des Verbinders 12 zur einfacheren Montage die Ausbildung des Sickenbereichs beziehungsweise der Sicken 9, 10 der Schelle 8 unterbrochen bzw. entfernt ist.

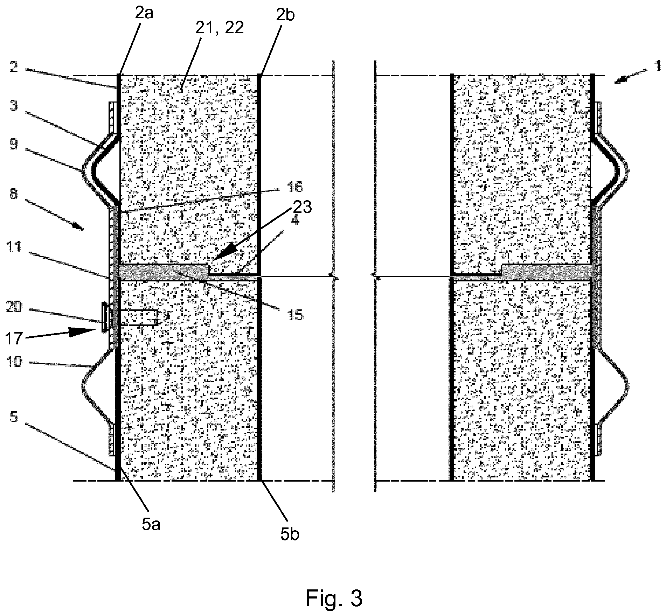

Das in Fig. 3 dargestellte Ausführungsbeispiel eines erfindungsgemäßen Rohrleitungssystems 1 unterscheidet sind von dem in Fig. 1 dargestellten Ausführungsbeispiel eines erfindungsgemäßen Rohrleitungssystems 1 hinsichtlich der Ausgestaltung des zweiten Rohres 5 und der Schelle 8. Bei dem in Fig. 3 dargestellten Ausführungsbeispiel eines erfindungsgemäßen Rohrleitungssystems 1 weist das zweite Rohr 5 zwar ebenfalls ein äußeres Rohrelement 5a und ein inneres Rohrelement 5b aus Stahlblech auf, wobei das innere Rohrelement 5b in dem äußeren Rohrelement 5a mit diesem einen Zwischenraum 21 bildend angeordnet und der Zwischenraum 21 mit einer Brandschutzmasse 22, ausgefüllt ist. Es fehlt dem zweiten Rohr 5, insbesondere dem äußeren Rohrelement 5a des zweiten Rohres 5, jedoch die Sicke 6. Ferner fehlt vorliegend bei dem zweiten Rohr 5 eine Aussparung und/oder Einnutung 23 für wenigstens einen Teil der Dichtungsmasse 15. Die Schelle 8 weist zum Verbinden der beiden Rohe 2 und 5 nach Fig. 3 zwischen der ersten Sicke 9 und der zweiten Sicke 10 drei über den Umfang vorteilhafterweise gleichmäßig verteilt angeordnete Fixierungspunkte bzw. -markierungen 17 zur Fixierung der Schelle 8 an dem Rohr 5 mittels jeweils einer Schraube 20 auf (in Fig. 3 ist nur eine Öffnung 17 und eine Schraube 20 sichtbar), welche durch die Schelle 8 und das äußere Rohrelement 5a des Rohrs 5 in die Brandschutzmasse 22 des Rohrs 5 geschraubt ist.

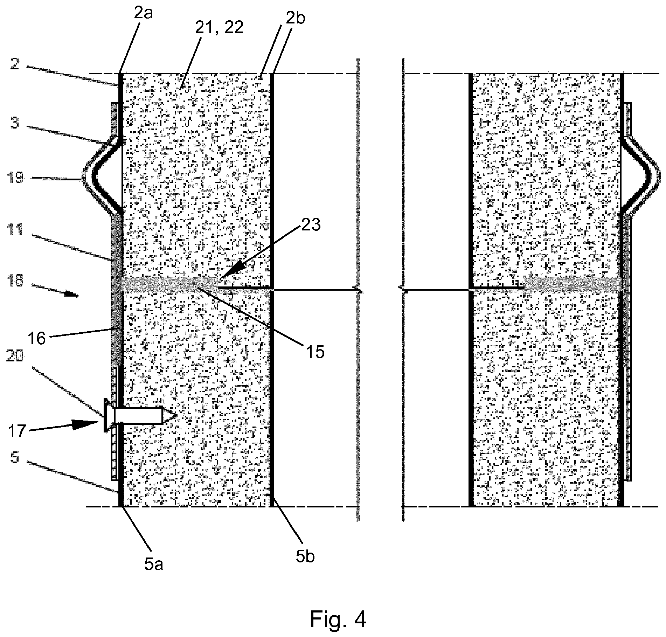

Das in Fig. 4 dargestellte Ausführungsbeispiel eines erfindungsgemäßen Rohrleitungssystems 1 unterscheidet sind von dem in Fig. 3 dargestellten Ausführungsbeispiel eines erfindungsgemäßen Rohrleitungssystems 1 hinsichtlich der Ausgestaltung der Schelle 18. Die Schelle 18 nach Fig. 4 weist gegenüber der Schelle 8 nach Fig. 3 eine zumindest abschnittsweise angeordnete Sicke 19 auf, welche mit einer an dem ersten Rohr 2 vorgesehenen Sicke 3 in Eingriff verbringbar ist. Ferner weist die Schelle 18 drei von der Sicke 19 beabstandete und über den Umfang vorteilhafterweise gleichmäßig verteilt angeordnete Fixierungspunkte bzw. - markierungen 17 zur Fixierung der Schelle 18 an dem zweiten Rohr 5 mittels jeweils einer Schraube 20 auf (in Fig. 4 ist nur eine Öffnung 17 und eine Schraube 20 sichtbar), welche durch die Schelle 18 und das äußere Rohrelement 5a des Rohrs 5 in die Brandschutzmasse 22 des Rohrs 5 geschraubt ist. Dabei ist die Stoßkante 4 des die Sicke 3 aufweisenden Endes des ersten Rohres 2 an der Stoßkante 7 des zweiten Rohres 5 angeordnet. Weiter weist die Schelle 18 einen sich zwischen der Sicke 19 und den Fixierungspunkten bzw. -markierungen 17 der Schelle 18 erstreckenden Mittenbereich 11 auf, welcher an einer zur Öffnung vorgesehenen Position der Schelle 18 einen Verbinder 12 zum Schließen der Schelle 18 aufweist, wie bei Schelle 8 gemäß Fig. 1 und Fig. 3.

Die in den Figuren der Zeichnung dargestellten Ausführungsbeispiele und die im Zusammenhang mit diesen erläuterten Ausführungsbeispiele dienen lediglich einer Erläuterung der Erfindung und sind für diese nicht beschränkend. Bezuaszeichenliste:
- 1: Rohrleitungssystem
- 2: erstes Rohr
- 2a: äußeres Rohrelement (Rohr (2))
- 2b: inneres Rohrelement (Rohr (2))
- 3: Sicke (erstes Rohr (2))
- 4: Stoßkante (erstes Rohr (2))
- 5: zweites Rohr
- 5a: äußeres Rohrelement (Rohr (5))
- 5b: inneres Rohrelement (Rohr (5))
- 6: Sicke (zweites Rohr (5))
- 7: Stoßkante (zweites Rohr (5))
- 8: Schelle
- 9: erste Sicke (Schelle (8))
- 10: zweite Sicke (Schelle (8))
- 11: Mittenbereich (Schelle (8))
- 12: Verbinder/Schraube
- 13: Gegenplatte mit Gewinde
- 14: Gegenplatte ohne Gewinde
- 15: Dichtungsmasse
- 16: Band
- 17: Fixierungspunkt bzw. -markierung (Schelle (8, 18)
- 18: Schelle
- 19: Sicke (Schelle (18))
- 20: Schraube
- 21: Zwischenraum (Rohr (2, 5))
- 22: Brandschutzmasse (Rohr (2, 5))
- 23: Aussparung/Einnutung (Rohr (2, 5))

## Patentansprüche

1. Rohrleitungssystem (1), zum Einsatz für feuerfeste Lüftungsleitungen, umfassend
- wenigstens ein erstes Rohr (2), welches an wenigstens einem Ende eine zumindest abschnittsweise radial im Außenbereich um den Umfang des ersten Rohres (2) verlaufende Sicke (3) aufweist,
- wenigstens ein zweites Rohr (5), welches an wenigstens einem Ende eine zumindest abschnittsweise radial im Außenbereich um den Umfang des zweiten Rohres (5) verlaufende Sicke (6) aufweist,
und
- wenigstens eine zur Verbindung der Rohre (2, 5) öffenbare Schelle (8), mit
- zwei zumindest abschnittsweise angeordneten Sicken (9, 10), wobei die erste der Sicken (9) mit der am ersten Rohr (2) vorgesehenen Sicke (3) und die zweite der Sicken (10) mit der am zweiten Rohr (5) vorgesehenen Sicke (6) in Eingriff verbringbar ist, wobei die Stoßkante (4) des die Sicke (3) aufweisenden Endes des ersten Rohres (2) an der Stoßkante (7) des die Sicke (6) aufweisenden Endes des zweiten Rohres (5) angeordnet ist,
**dadurch gekennzeichnet dass**
- einem sich zwischen den Sicken (9, 10) der Schelle (8) erstreckenden Mittenbereich (11), welcher an einer zur Öffnung vorgesehenen Position der Schelle (8) einen Verbinder (12) zum Schließen der Schelle (8) aufweist und
- zwischen der Stoßkante (4) des die Sicke (3) aufweisenden Endes des ersten Rohres (2) und der Stoßkante (7) des die Sicke (6) aufweisenden Endes des zweiten Rohres (5) zumindest teilweise eine Dichtungsmasse (15) angeordnet ist
- der Bereich der aneinanderstoßenden Stoßkanten (4, 7) des die Sicke (3) aufweisenden Endes des ersten Rohres (2) und des die Sicke (6) aufweisenden Endes des zweiten Rohres (5) von außen zumindest teilweise mit einem Band (16) versehen ist, durch welches der sich unterhalb der Schelle (8) befindende Stoßbereich überdeckt bzw. überdeckbar ist und als Band (16) oder als zusätzliche Dichtung ein drucklos aufschäumendes, flexibles Brandschutzlaminat oder ein unter Druck aufblähendes Material vorgesehen ist.

2. Rohrleitungssystem (1) nach Anspruch 1, **dadurch gekennzeichnet dass** eine Sicke eine Breite in einem Bereich von 8 mm bis 50 mm und/oder eine Höhe in einem Bereich von 5 mm bis 15 mm aufweist.

3. Rohrleitungssystem (1) nach einem der Ansprüche 1 oder 2, **dadurch gekennzeichnet, dass** die korrespondierend in den Rohren (2, 4) beziehungsweise der Schelle (8) angeordneten Sicken (3, 6; 9, 10) zur Ausbildung einer kraft- und/oder formschlüssigen Verbindung der Rohre (2, 3) ausgebildet sind.

4. Rohrleitungssystem (1) nach einem der Ansprüche 1 bis 3, **dadurch gekennzeichnet, dass** als Verbinder (12) zum Schließen der Schelle (8) ein Einschraubenverbinder oder ein Zweischraubenverbinder vorgesehen ist.

5. Rohrleitungssystem (1) nach einem der Ansprüche 1 bis 4, **dadurch gekennzeichnet, dass** der Verbinder (12) zum Schließen der Schelle (8) auf einer ersten Seite eine Gegenplatte (13) mit Gewinde und auf einer zweiten Seite eine Gegenplatte (14) ohne Gewinde aufweist.

6. Rohrleitungssystem (1) nach einem der Ansprüche 1 bis 5, **dadurch gekennzeichnet, dass** als Dichtungsmasse (15) eine flexible Einkomponenten-Dichtungsmasse vorgesehen ist.

7. Rohrleitungssystem (1) nach einem der Ansprüche 1 bis 6, **dadurch gekennzeichnet, dass** als Band (16) einem Aluminiumband vorgesehen ist.

8. Rohrleitungssystem (1) nach einem der Ansprüche 1 bis 7, **dadurch gekennzeichnet, dass** durch die Schelle (8) der Abstand der zu verbindenden Rohre (2, 5) festlegbar ist, insbesondere durch Beabstandung der zwei zumindest abschnittsweise angeordneten Sicken (9, 10) der Schelle (8).

## Claims

1. The piping system (1) for use for refractory ventilation lines, comprising:
- at least one first tube (2) having, at at least one end, a bead (3) extending radially at least in sections in the outer region around the circumference of the first tube (2),
- at least one second tube (5) having, at at least one end, a bead (6) extending radially at least in sections in the outer region around the circumference of the second tube (5),
and
- at least one clamp (8) that can be opened to connect the pipes (2, 5), with
- two beads (9, 10) arranged at least in sections, wherein the first of the beads (9) can be brought into engagement with the bead (3) provided on the first tube (2), and the second of the beads (10) can be brought into engagement with the bead (6) provided on the second tube (5), wherein the abutting edge (4) of the end of the first tube (2) having the bead (3) is arranged on the abutting edge (7) of the end of the second tube (5) having the bead (6),
**characterized in that**
- a central region (11) extending between the beads (9, 10) of the clamp (8) and having a connector (12) for closing the clamp (8) at a position of the clamp (8) provided for opening, and
- a sealing compound (15) is at least partially arranged between the abutting edge (4) of the end of the first tube (2) having the bead (3) and the abutting edge (7) of the end of the second tube (5) having the bead (6)
- the region of the adjoining abutting edges (4, 7) of the end of the first tube (2) having the bead (3) and the end of the second tube (5) having the bead (6) is at least partially provided with a band (16) from the outside by means of which the joint region located below the clamp (8) is covered or can be covered, and a pressure-free foaming, flexible fire protection laminate or a material expandable under pressure is provided as band (16) or as an additional seal.

2. The piping system (1) according to claim 1, **characterized in that** a bead has a width within a range from 8 mm to 50 mm and/or a height within a range from 5 mm to 15 mm.

3. The piping system (1) according to claim 1 or 2, **characterized in that** the beads (3, 6; 9, 10) that are correspondingly arranged in the tubes (2, 4) or the clamp (8) are designed to form a friction and/or keyed connection of the pipes (2, 3).

4. The piping system (1) according to one of claims 1 to 3, **characterized in that** a one-screw connector or a two-screw connector is provided as the connector (12) for closing the clamp (8).

5. The piping system (1) according to one of claims 1 to 4, **characterized in that** the connector (12) has a counter plate (13) with a thread on a first side, and a counter plate (14) without a thread on a second side to close the clamp (8).

6. The piping system (1) according to one of claims 1 to 5, **characterized in that** a flexible one-component sealing compound is provided as the sealing compound (15).

7. The piping system (1) according to one of claims 1 to 6, **characterized in that** an aluminum band is provided as the band (16).

8. The piping system (1) according to one of claims 1 to 7, **characterized in that** the clamp (8) can be used to fix the distance between the pipes (2, 5) to be connected, in particular by spacing the two beads (9, 10) of the clamp (8) arranged at least in sections.

## Revendications

1. Système de conduit (1), destiné à être utilisé pour des conduits d'aération résistant au feu, comprenant
- au moins un premier tube (2), qui présente au niveau d'au moins une extrémité un bourrelet (3) s'étendant au moins par sections radialement dans la zone externe autour de la périphérie du premier tube (2),
- au moins un deuxième tube (5), qui présente au niveau d'au moins une extrémité une bourrelet (6) s'étendant au moins par sections radialement dans la zone externe autour de la périphérie du deuxième tube (5),
et
- au moins un collier (8) pouvant être ouvert pour la liaison des tubes (2, 5), comprenant
- deux bourrelets (9, 10) disposées au moins par sections, le premier des bourrelets (9) pouvant venir en prise avec le bourrelet (3) située sur le premier tube (2) et le deuxième des bourrelets (10) pouvant venir en prise avec le bourrelet (6) située sur le deuxième tube (5), le bord de butée (4) de l'extrémité du premier tube (2) présentant le bourrelet (3) étant disposé au niveau du bord de butée (7) de l'extrémité du deuxième tube (5) présentant le bourrelet (6),
**caractérisé en ce que**
- une zone intermédiaire (11) s'étendant entre les bourrelets (9, 10) du collier (8), qui présente au niveau d'une position du collier (8) destinée à l'ouverture un raccord (12) pour la fermeture du collier (8) et
- un matériau d'étanchéité (15) est disposé au moins partiellement entre le bord de butée (4) de l'extrémité du premier tube (2) présentant le bourrelet (3) et le bord de butée (7) de l'extrémité du deuxième tube (5) présentant le bourrelet (6),
- la zone des bords de butée (4, 7) en butée de l'extrémité du premier tube (2) présentant le bourrelet (3) et de l'extrémité du deuxième tube (5) présentant le bourrelet (6) est pourvue, depuis l'extérieur, au moins partiellement, d'une bande (16), par laquelle la zone de butée se trouvant sous le collier (8) est recouverte ou peut être recouverte et, en guise de bande (16) ou en guise d'étanchéité supplémentaire, un laminé d'ignifugation flexible moussant sans pression ou un matériau intumescent sous pression est prévu.

2. Système de conduit (1) selon la revendication 1, **caractérisé en ce qu'un** bourrelet présente une largeur dans une plage de 8 mm à 50 mm et/ou une hauteur dans une plage de 5 mm à 15 mm.

3. Système de conduit (1) selon l'une quelconque des revendications 1 ou 2, **caractérisé en ce que** les bourrelets (3, 6 ; 9, 10) disposés de manière correspondante dans les tubes (2, 4) ou le collier (8) sont conçus pour former une liaison par complémentarité de forme et/ou à force des tubes (2, 3).

4. Système de conduit (1) selon l'une quelconque des revendications 1 à 3, **caractérisé en ce que,** en guise de raccord (12) pour la fermeture du collier (8), un raccord à une ou à deux vis est prévu.

5. Système de conduit (1) selon l'une quelconque des revendications 1 à 4, **caractérisé en ce que** le raccord (12) pour la fermeture du collier (8) présente, sur un premier côté, une contre-plaque (13) avec filetage et sur un deuxième côté une contre-plaque (14) sans filetage.

6. Système de conduit (1) selon l'une quelconque des revendications 1 à 5, **caractérisé en ce que,** en guise de matériau d'étanchéité (15), un matériau d'étanchéité à un composant flexible est prévu.

7. Système de conduit (1) selon l'une quelconque des revendications 1 à 6, **caractérisé en ce que,** en guise de bande (16), une bande d'aluminium est prévue.

8. Système de conduit (1) selon l'une quelconque des revendications 1 à 7, **caractérisé en ce que** par le collier (8), la distance des tubes (2, 5) à relier peut être définie, en particulier par écartement des deux bourrelets (9, 10) disposés au moins par sections du collier (8).
